# EUROPEAN PATENT APPLICATION

(11) **EP 4 700 518 A1**
(43) Date of publication of application: **25.02.2026**
(21) Application number: 23933663.9
(22) Date of filing: 09.08.2023
(51) Int. Cl.: G05D 1/00

(54) **METHOD FOR STRAIGHTENING MAP**

(30) Priority: 18.04.2023 CN 202310440883
(71) Applicant: Zhejiang Sunseeker Industrial Co., Ltd., Jinhua, Zhejiang 321042 (CN)
(72) Inventor: LIU, Jihan, Jinhua, Zhejiang 321042 (CN); HU, Lang, Jinhua, Zhejiang 321042 (CN)
(74) Representative: Manna, Sara
(86) International application number: PCT/CN2023/111961
(87) International publication number: WO 2024/216790

(57) **Abstract**

The present disclosure relates to the technical field of robots, and in particular, discloses a map alignment method. The method includes the following steps: acquiring boundary information of a map, wherein the boundary information includes state information of boundary lines and a total boundary length, and the total boundary length is a sum of lengths of all the boundary lines; classifying all boundary lines that meet a preset condition into one orthogonal line group; determining a relationship between a reference ratio and a determination threshold, if a first relationship is met, establishing a plane Cartesian coordinate system according to a first reference, and if a second relationship is met, establishing a plane Cartesian coordinate system according to a second reference, wherein the reference ratio is a ratio of a maximum boundary line length to the total boundary length, with the boundary line length being defined as a sum of lengths of all boundary lines within one orthogonal line group; and aligning the map according to the plane Cartesian coordinate system, and outputting the boundary information of the aligned map to a user terminal. The method decides the plane Cartesian coordinate system by determining the reference ratio, thus achieving the alignment of the map.

## Description

### TECHNICAL FIELD

The present disclosure relates to the technical field of robots, and in particular to a map alignment method.

### BACKGROUND

In the prior art, cleaning robots can create maps of their surrounding environment using LiDAR (Light Detection and Ranging) technology to facilitate positioning and navigation during subsequent cleaning processes. However, the initial construction of a map by a cleaning robot typically uses the cleaning robot's own first-person perspective as the positive direction. Due to the different initial poses of the cleaning robot, the orientation of maps corresponding to the same area may not be consistent after initial formation or alignment based on the initial pose. This results in varying map orientations received by the user terminal, posing a significant challenge for the display unit of the user terminal.

In the prior art, cleaning robots often use SLAM (Simultaneous Localization and Mapping) technology to construct maps corresponding to the environment around the cleaning robot. However, when a cleaning robot constructs a map, it usually starts constructing the map from the initial position at which the robot is activated. The map constructed in this way may be somewhat tilted, and the tilted map makes subsequent positioning and movement decisions more difficult, thereby affecting the work efficiency of the cleaning robot.

Therefore, there is an urgent need for a method to align the map, ensuring consistency in the alignment results while reducing the difficulty of full display by the display unit. This would allow users to receive maps that have been correctly aligned, thereby reducing the difficulty for users to understand the maps.

### SUMMARY

The objective of the present disclosure is to provide a map alignment method to achieve the alignment operation of the map, standardizing the map adjustment method so that the map can adapt to the observation habits of users, and helping to reduce the difficulty of fully displaying the map.

To achieve the objective, the present disclosure adopts the following technical solutions:
Provided is a map alignment method. The map alignment method includes the following steps:
S10: acquiring boundary information of a map, where the boundary information includes state information of boundary lines and a total boundary length, and the total boundary length is configured as a sum of lengths of all the boundary lines;
S20: classifying all boundary lines that meet a preset condition into one orthogonal line group;
S30: determining a relationship between a reference ratio and a determination threshold, if a first relationship is met, proceeding to S40, and if a second relationship is met, proceeding to S50, wherein the reference ratio is a ratio of a maximum boundary line length to the total boundary length, with the boundary line length being defined as a sum of lengths of all boundary lines within one orthogonal line group;
S40: establishing a plane Cartesian coordinate system based on a first reference, then proceeding to S60;
S50: establishing a plane Cartesian coordinate system based on a second reference, then proceeding to S60; and
S60: aligning the map according to the plane Cartesian coordinate system, and outputting the boundary information of the aligned map to a user terminal.

As a preferred technical solution of the map alignment method, the preset condition is that the boundary lines have a parallel, collinear, or perpendicular relationship with each other.

As a preferred technical solution of the map alignment method, the first relationship is that the reference ratio is not less than the determination threshold, and the second relationship is that the reference ratio is less than the determination threshold; the first reference is a boundary line corresponding to the reference ratio, and the second reference is a reference circumscribed rectangle.

As a preferred technical solution of the map alignment method, S20 includes the following detailed steps:
S21: selecting any one of the boundary lines as a positioning line;
S22: taking all boundary lines that are parallel, collinear, or perpendicular to the positioning line as orthogonal lines, summing the positioning line and all the orthogonal lines to provide a boundary line length, and calculating and recording the boundary line length;
S23: repeating the selection of a positioning line and calculating a corresponding boundary line length until no further positioning lines can be selected, then calculating and recording all boundary line lengths; and
S24: comparing and selecting a maximum boundary line length from all the boundary line lengths, and calculating a ratio of the maximum boundary line length to the total boundary length as the reference ratio.

As a preferred technical solution of the map alignment method, S23 includes the following detailed steps:
S231: determining whether there exists any boundary line that has not yet been used as either the positioning line or the orthogonal line, if so, proceeding to S232, and if not, proceeding to S24; and
S232: selecting any boundary line that has not yet been used as either the positioning line or the orthogonal line, replacing the boundary line as the positioning line, then repeating S22.

As a preferred technical solution of the map alignment method, S50 includes the following detailed steps:
S51: establishing a circumscribed plane Cartesian coordinate system, using two longer sides parallel to an X-axis of the circumscribed plane Cartesian coordinate system and two shorter sides parallel to a Y-axis of the circumscribed plane Cartesian coordinate system to generate a circumscribed rectangle of a shape formed by the boundary lines, using an area of the circumscribed rectangle as a test area, and calculating and recording the test area;
S52: rotating the circumscribed plane Cartesian coordinate system for a predetermined angle multiple times, selecting the circumscribed plane Cartesian coordinate system in different angles and calculating a corresponding test area until the circumscribed plane Cartesian coordinate system has been rotated by 90°, then calculating and recording all test areas; and
S53: comparing all the test areas, and using a circumscribed rectangle with a smallest test area among all the test areas as the reference circumscribed rectangle.

As a preferred technical solution of the map alignment method, the following steps are further included after S10:
S11: searching for a specified reference; and
S12: determining whether there exists the specified reference, if so, aligning the map based on the specified reference and outputting the boundary information of the aligned map to the user terminal, and if not, proceeding to S20.

As a preferred technical solution of the map alignment method, the following steps are further included before S20:
S18: determining whether a ratio of a length of a longest boundary line to the total boundary length is not less than the determination threshold, if so, proceeding to S19, and if not, proceeding to S20; and
S19: establishing a plane Cartesian coordinate system with the longest boundary line as a reference, then proceeding to S60.

As a preferred technical solution of the map alignment method, the following steps are further included before S30:
S28: determining whether there exists an orthogonal line group with at least two boundary lines, if so, proceeding to S30, and if not, proceeding to S50.

As a preferred technical solution of the map alignment method, the following steps are further included before S30:
S29: determining whether there exist at least two maximum boundary line lengths, if so, proceeding to S50, and if not, proceeding to S30.

The beneficial effects of the present disclosure are as follows:
By extracting boundary lines from the map and classifying the extracted boundary lines into different orthogonal line groups, the map alignment method allows for the obtaining of the boundary line length for each orthogonal line group. The ratio of the maximum boundary line length to the total boundary length is calculated and then compared with a determination threshold, such that the method for establishing the reference for map alignment is determined. The above design achieves the objective of establishing a plane Cartesian coordinate system, thereby completing the process of aligning the map. Finally, the map is aligned according to the established plane Cartesian coordinate system, and the aligned map is presented to the user through a user terminal. The above method decides the plane Cartesian coordinate system by determining the reference ratio, thereby realizing the map alignment operation. The method standardizes the map adjustment method so that the map can adapt to the observation habits of users, which helps to reduce the difficulty of fully displaying the map.

### BRIEF DESCRIPTION OF THE DRAWINGS

FIG. 1 is a simplified workflow diagram of a map alignment method according to the embodiment of the present disclosure;
FIG. 2 is a detailed workflow diagram of the map alignment method according to the embodiment of the present disclosure;
FIG. 3 is a schematic diagram of a first application scenario of the map alignment method according to the embodiment of the present disclosure;
FIG. 4 is a schematic diagram of a second application scenario of the map alignment method according to the embodiment of the present disclosure; and
FIG. 5 is a schematic diagram of a third application scenario of the map alignment method according to the embodiment of the present disclosure.

In the figures:
110, first positioning line; 120, second positioning line; 200, reference plane Cartesian coordinate system; 310, third positioning line; 320, fourth positioning line; 330, fifth positioning line; 400, circumscribed plane Cartesian coordinate system; 500, first circumscribed rectangle; 600, second circumscribed rectangle; 700, third circumscribed rectangle; 800, fourth circumscribed rectangle; 900, fifth circumscribed rectangle.

### DETAILED DESCRIPTION

The technical solutions of the present disclosure will be clearly and comprehensively described hereinafter in conjunction with the accompanying drawings. It is evident that the described embodiments are part of the embodiments of the present disclosure, rather than all of them. All other embodiments obtained by those of ordinary skill in the art without creative efforts with respect to the embodiments in the present disclosure shall fall within the protection scope of the present disclosure. In the description of the present disclosure, it should be noted that the terms "center", "upper", "lower", "left", "right", "vertical", "horizontal", "inner", "outer", and the like indicate orientations or positional relationships based on those shown in the accompanying drawings, which is merely for the convenience of describing the present disclosure and simplifying the description, rather than indicating or implying that the apparatus or element referred to must have a specific orientation, be constructed and operated in the specific orientation, so it cannot be understood as a limitation to the present disclosure. Furthermore, the terms "first" and "second" are used for descriptive purposes only and should not be construed as indicating or implying relative importance. The terms "first position" and "second position" refer to two different positions. Moreover, a first feature being "on", "above", and "over" a second feature includes the first feature being directly above and obliquely above the second feature, or simply indicates that the horizontal height of the first feature is higher than that of the second feature. A first feature being "beneath", "under", and "below" a second feature includes the first feature being directly under and obliquely under the second feature, or simply indicates that the horizontal height of the first feature is lower than that of the second feature.

In the description of the present disclosure, it should be noted that unless otherwise explicitly specified or defined, the terms "mount", "interconnect", and "connect" should be understood in their broad sense. For example, "connect" may be "fixedly connect", "detachably connect", or "integrally connect"; "mechanically connect" or "electrically connect"; or "directly interconnect", "indirectly interconnect through an intermediate" or "the communication between the interiors of two elements". For those of ordinary skill in the art, the specific meanings of the above terms in the present disclosure can be understood according to specific conditions.

The embodiments of the present disclosure are described in detail hereinafter, with examples of the embodiments illustrated in the accompanying drawings. Throughout the accompanying drawings, the same or similar reference numbers indicate the same or similar elements or elements having the same or similar functions. The embodiments described hereinafter with reference to the accompanying drawings are exemplary and are only intended to explain the present disclosure. They should not be construed as limiting the scope of the present disclosure.

In the initial map construction, the coordinate system used by the map is the default coordinate system. During the process of map alignment, a reference coordinate system needs to be established. The objective of aligning the map is achieved by mapping points from the default coordinate system to the reference coordinate system.

The boundary lines of the map include both the outer boundary and the inner boundary of the map. In the initial state, with reference to the default coordinate system, the state information of the boundary lines can be obtained, which includes the lengths of the boundary lines and the included angles between adjacent boundary lines.

The boundary information of the map includes the state information of the boundary lines and the total boundary length. The state information of the boundary lines includes the length and direction of each boundary line. The total boundary length is calculated from the boundary line information and is configured as the sum of the lengths of all the boundary lines.

The map boundary is formed by connecting straight-line segments end to end. In some embodiments, the boundary lines are straight-line segments. In other embodiments, the boundary lines are straight-line segments with a length greater than a certain threshold, and the straight-line segments are obtained through the Hough transformation.

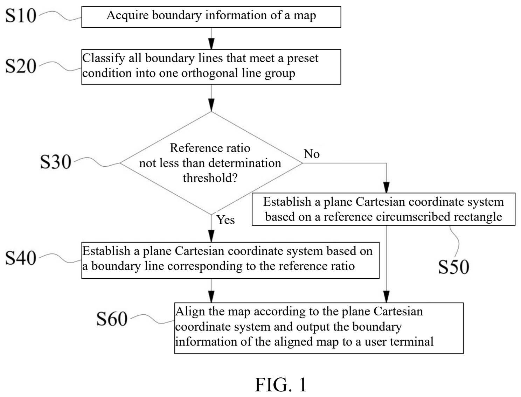

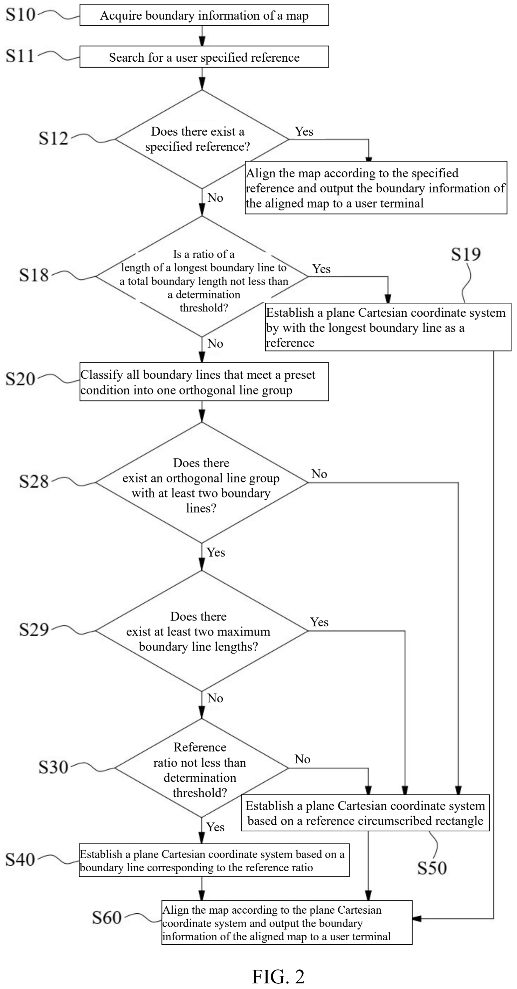

As shown in FIGS. 1 to 5, a map alignment method is provided according to the embodiment. The map alignment method includes the following steps:
In step one, boundary information of a map is acquired.

In step two, all boundary lines that meet a preset condition are classified into one orthogonal line group.

In step three, a relationship between a reference ratio and a determination threshold is determined, where if a first relationship is met, proceed to step four; if a second relationship is met, proceed to step five.

In step four, a plane Cartesian coordinate system is established based on a first reference, then proceed to step six.

In step five, a plane Cartesian coordinate system is established based on a second reference, then proceed to step six.

In step six, the map is aligned according to the plane Cartesian coordinate system, and the boundary information of the aligned map is output to a user terminal.

In the embodiment, the reference ratio is defined as the ratio of the maximum boundary line length to the total boundary length, with the boundary line length being defined as the sum of the lengths of all boundary lines within one orthogonal line group.

By extracting boundary lines from the map and classifying the extracted boundary lines into different orthogonal line groups, the map alignment method allows for the obtaining of the boundary line length for each orthogonal line group. The ratio of the maximum boundary line length to the total boundary length is calculated and then compared with a determination threshold, such that the method for establishing the reference for map alignment is determined. The above design achieves the objective of establishing a plane Cartesian coordinate system, thereby completing the process of aligning the map. Finally, the map is aligned according to the established plane Cartesian coordinate system, and the aligned map is presented to the user through a user terminal. The above method decides the plane Cartesian coordinate system by determining the reference ratio, thereby realizing the map alignment operation. The method standardizes the map adjustment method so that the map can adapt to the observation habits of users, which helps to reduce the difficulty of fully displaying the map.

In the embodiment, the preset condition is that the boundary lines have a parallel, collinear, or perpendicular relationship with each other.

In the embodiment, during step two, the detailed process is as follows: integrating all the boundary lines on the map and classifying all boundary lines that have a parallel, collinear, or perpendicular relationship into an orthogonal line group. During step three, the detailed process is as follows: calculating and comparing the sum of the lengths of the boundary lines for each orthogonal line group after all the boundary lines have been grouped, and selecting the largest one as the maximum boundary line length; then calculating the ratio of the maximum boundary line length to the total boundary length and obtaining the ratio as the reference ratio.

Further, the first relationship is that the reference ratio is not less than the determination threshold, and the second relationship is that the reference ratio is less than the determination threshold; the first reference is the boundary line corresponding to the reference ratio, and the second reference is a reference circumscribed rectangle. This step determines whether the reference ratio exceeds the determination threshold. If so, proceed to step four; if not, proceed to step five.

During step four, the detailed process is as follows: extracting boundary lines corresponding to the reference ratio and establishing a plane Cartesian coordinate system that corresponds to the boundary lines; then, proceeding to step six to align the map according to the plane Cartesian coordinate system, and outputting the boundary information of the aligned map to the user terminal.

During step five, the detailed process is as follows: acquiring the reference circumscribed rectangle of the map and establishing a plane Cartesian coordinate system that corresponds to the reference circumscribed rectangle; then, proceeding to step six to align the map according to the plane Cartesian coordinate system, and outputting the boundary information of the aligned map to the user terminal.

The above process determines whether the straight-line reference determination method is suitable for aligning the map. If suitable, the straight-line reference determination method is used to position the plane Cartesian coordinate system. If not suitable, the rectangular reference determination method is used instead to position the plane Cartesian coordinate system. The above design combines the straight-line reference determination method and the rectangular reference determination method of the plane Cartesian coordinate system to establish a plane Cartesian coordinate system, thereby achieving the map aligning operation.

The determination threshold is between 40% and 80%. The determination threshold is a preset value, but users can adjust it according to their actual needs. Specifically, in the embodiment, the determination threshold is 60%.

In the embodiment, step four further includes the following content: The X-axis of the plane Cartesian coordinate system is parallel to one of all the boundary lines corresponding to the reference ratio. The above specification provides a standard for determining the direction of the plane Cartesian coordinate system, which avoids variations in the results of the map alignment operation and ensures the reliability of the alignment results.

In the embodiment, step two includes the following detailed steps: selecting any boundary line as a positioning line; taking all boundary lines that are parallel, collinear, or perpendicular to the positioning line as orthogonal lines, summing the positioning line and all the orthogonal lines to provide the boundary line length, and calculating and recording the boundary line length; repeating the selection of a positioning line and calculating a corresponding boundary line length until no further positioning lines can be selected, then calculating and recording all boundary line lengths; and comparing and selecting a maximum boundary line length from all the boundary line lengths, and calculating a ratio of the maximum boundary line length to the total boundary length as a reference ratio. The above steps can help to effectively complete the calculation of boundary line lengths for each orthogonal line group and select the maximum among them, thereby calculating the reference ratio. Therefore, the technical objective of acquiring the reference ratio is achieved, which facilitates the smooth operation of the map alignment method and ensures the accuracy of the map alignment results.

Further, repeating the selection of the positioning line and calculating the corresponding boundary line length includes the following detailed steps: determining whether there exists any boundary line that has not yet been used as either the positioning line or the orthogonal line; if so, selecting any boundary line that has not yet been used as either the positioning line or the orthogonal line, replacing the boundary line as the positioning line, then returning to the step of selecting orthogonal lines; and if not, comparing all the boundary line lengths and calculating the ratio of the maximum boundary line length to the total boundary length as the reference ratio. The above process can help to effectively prevent omissions and errors during the recording process, guaranteeing the accuracy and completeness of the boundary line lengths. This ensures that the reference ratio can be accurately calculated and selected, further guaranteeing the accuracy of the map alignment results.

In another embodiment, step two includes the following detailed steps: selecting any boundary line as a positioning line; taking all boundary lines that are parallel, collinear, or perpendicular to the positioning line as orthogonal lines, taking a ratio of a sum of lengths of the positioning line and all the orthogonal lines to a total boundary length as a test ratio, and calculating and recording the test ratio; repeating the selection of a positioning line and calculating a corresponding test ratio until no further positioning lines can be selected, then calculating and recording all test ratios; and comparing all the test ratios and selecting a largest test ratio as a reference ratio. The above steps can help to effectively complete the calculation of the ratio of the sum of the lengths of each group of boundary lines to the total boundary length and select the largest ratio as the reference ratio. Therefore, the technical objective of acquiring the reference ratio is achieved, which facilitates the smooth operation of the map alignment method and ensures the accuracy of the map alignment results.

Further, repeating the selection of the positioning line and calculating the corresponding test ratio includes the following detailed steps: determining whether there exists any boundary line that has not yet been used as either the positioning line or the orthogonal lines; if so, selecting any boundary line that has not yet been used as either the positioning line or the orthogonal line, replacing the boundary line as the positioning line, then returning to the step of selecting orthogonal lines; and if not, comparing all the test ratios and selecting the largest ratio as the reference ratio. The above process can help to effectively prevent omissions and errors during the recording process, guaranteeing the accuracy and completeness of the test ratio records. This ensures that the reference ratio can be accurately calculated and selected, further guaranteeing the accuracy of the map alignment results.

Exemplarily, step six further includes the following content: The X-axis of the plane Cartesian coordinate system is parallel to the longer side of the reference circumscribed rectangle, and the Y-axis of the plane Cartesian coordinate system is parallel to the shorter side of the reference circumscribed rectangle. The above specification provides a standard for determining the direction of the plane Cartesian coordinate system, which avoids variations in the results of the map alignment operation and ensures the reliability of the alignment results. Meanwhile, designing the X-axis to be parallel to the longer side and the Y-axis to be parallel to the shorter side makes it easier to adapt to the dimensions of common display units today. This helps to further reduce the difficulty of fully displaying the map on a display unit, thereby further improving the user's perception of the map.

Further, step five includes the following detailed steps: establishing a circumscribed plane Cartesian coordinate system 400, using two longer sides parallel to the X-axis of the circumscribed plane Cartesian coordinate system 400 and two shorter sides parallel to the Y-axis of the circumscribed plane Cartesian coordinate system 400 to generate a circumscribed rectangle of the shape formed by the boundary lines, using an area of the circumscribed rectangle as a test area, and calculating and recording the test area; rotating the circumscribed plane Cartesian coordinate system 400 by a predetermined angle multiple times, selecting the circumscribed plane Cartesian coordinate system 400 in different angles and calculating a corresponding test area until the circumscribed plane Cartesian coordinate system 400 has been rotated by 90°, then calculating and recording all test areas; and comparing all the test areas, and using a circumscribed rectangle with a smallest test area among all the test areas as the reference circumscribed rectangle. The above steps can help to successfully complete the operation of acquiring the reference circumscribed rectangle. Therefore, the technical objective of acquiring the reference circumscribed rectangle is achieved, which facilitates the subsequent determination of the position of the circumscribed plane Cartesian coordinate system 400 and further ensures the accuracy of the map alignment results.

Even further, rotating the circumscribed plane Cartesian coordinate system 400 by the predetermined angle multiple times includes the following detailed steps: rotating the circumscribed plane Cartesian coordinate system 400 (N-1) times, each time by (90/N)°, and calculating and recording the test area corresponding to each circumscribed plane Cartesian coordinate system 400; then, comparing all the test areas, and using the circumscribed rectangle with the smallest test area among all the test areas as the reference circumscribed rectangle. The above operation, by acquiring and calculating the circumscribed rectangles, increases the number of samples, thereby allowing the position of the reference circumscribed rectangle to approach that of the smallest circumscribed rectangle. This design ensures the accuracy of the selected reference circumscribed rectangle, such that the map alignment effect can be enhanced and the accuracy of the map alignment results is further guaranteed.

The value of N is selected as an integer greater than or equal to 2. In the embodiment, N = 90. In other embodiments of the embodiment, N is selected as any other integer greater than or equal to 2. The larger the selected value, the more circumscribed rectangles are generated, and the area of the obtained reference circumscribed rectangle becomes closer to the smallest circumscribed rectangle. The above setup allows for a more regular alignment position of the map, which helps to further reduce the difficulty of display for a display unit. However, increasing N also increases the number of circumscribed rectangles, which increases the workload of analysis and slows down the obtaining of the reference circumscribed rectangle. The selection of the specific value of N is determined by those skilled in the art based on comprehensive working conditions, and the determination methods are conventional technical means in the art, which will not be further elaborated here.

When generating the circumscribed rectangle, it is necessary to ensure that each side of the circumscribed rectangle touches the shape formed by the boundary lines. This design ensures that the circumscribed rectangle accurately circumscribes the shape formed by the boundary lines.

In the embodiment, after step one, the following steps are further included: searching for a specified reference; determining whether there exists a specified reference; if so, aligning the map based on the specified reference and outputting the boundary information of the aligned map to the user terminal; and if not, proceeding to step two. The above design allows the reference for aligning the map to also be determined through the manual setting by a user, thus significantly enhancing the flexibility of the map alignment operation and achieving a user-friendly design. This ensures that the position of the plane Cartesian coordinate system can be set manually or selected automatically. The specified reference is usually specified by the user. After acquiring the boundary information of the map, the search for the specified reference is conducted directly, which not only ensures the priority of user searches but also streamlines the process of the map alignment method by omitting unnecessary calculations and records, thereby effectively improving the efficiency of the alignment operation.

In the embodiment, the priority of the method for determining the plane Cartesian coordinate system is user setting followed by a straight-line reference determination method and a rectangular reference determination method. If the result of the map alignment is unsatisfactory, the user can change the map alignment result again through user settings. The specific changing methods are common knowledge in the art and are well understood by those skilled in the art, which will not be further elaborated here.

In the embodiment, before step two, the following steps are further included: determining whether the ratio of the length of the longest boundary line to the total boundary length is not less than a determination threshold; if so, establishing a plane Cartesian coordinate system with the longest boundary line as a reference, then proceeding to step six; and if not, proceeding to step two. The above steps allow for the determination of whether there exists a boundary line that satisfies the relationship with the determination threshold. If so, it proves that the boundary line length of the orthogonal line group where the boundary line is located is the maximum, and its reference ratio naturally meets the relationship requirement of the determination threshold. By performing the above steps before step two, it can be determined whether the map can be aligned using the straight-line reference determination method. In this way, a batch of maps that meet the first relationship can be determined in advance to use the straight-line reference determination method before determining the relationship between the reference ratio and the determination threshold. This design helps to reduce the workload of the map alignment method, optimizes the process of the map alignment method, and speeds up execution. The above steps are simple and effective, improving the efficiency of map alignment, reducing judgment errors made by users, and enhancing the quality of map alignment.

Exemplarily, before step three, the following steps are further included: determining whether there exists an orthogonal line group with at least two boundary lines; if so, proceeding to step three; and if not, proceeding to step five. The above steps allow for the determination of whether all the boundary lines form orthogonal line groups individually. In this case, no two boundary lines are parallel, collinear, or perpendicular to each other, and the ratio of any one boundary line to the total boundary length is relatively small. After aligning based on the straight-line reference determination method, only one boundary line is placed horizontally or vertically, which may affect the user's perception in some cases and pose a significant challenge to the display capability of the display unit. Considering these factors, it is preferable to align the map using the rectangular reference determination method. The above steps allow for the alignment of maps that meet the above conditions by using the rectangular reference determination method. In this way, the quality of map alignment is enhanced and the difficulty of display for a display unit is reduced. Moreover, performing the above steps before step three optimizes the process of the map alignment method, helps to reduce the workload of the map alignment method, and improves the efficiency of map alignment.

In other embodiments of the embodiment, if there exist two or more maximum boundary line lengths, the display unit presents a plurality of rotation solutions for the user to select through interaction with the display unit.

In the embodiment, before step three, the following steps are further included: determining whether there exist at least two maximum boundary line lengths; if so, proceeding to step five; and if not, proceeding to step three. The above steps allow for the analysis of the state information of the boundary lines before determining the relationship between the reference ratio and the determination threshold. When there exist boundary lines with the maximum length, it is evident that the reference ratio will not exceed 50%, and the result of aligning the map is prone to causing visual judgment errors for the user, thus affecting normal observation, which fails to leverage the advantages of the straight-line reference determination method for alignment. Therefore, it is easy to determine that the straight-line reference determination method is no longer the best way to align the map, and switching to the rectangular reference determination method is more appropriate. Moreover, performing the above steps before step three helps to reduce the workload of the map alignment method. The above steps are simple and effective, optimizing the process of the map alignment method, improving the efficiency of map alignment, reducing judgment errors made by users, and enhancing the quality of map alignment.

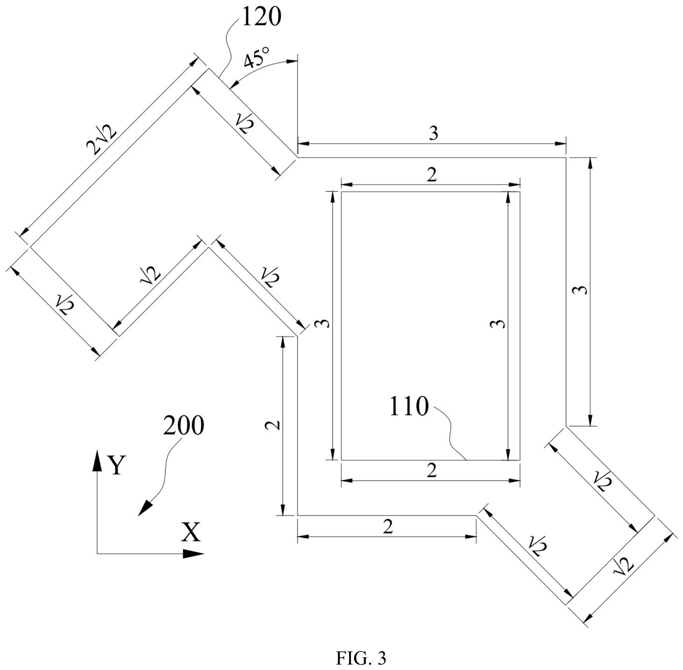

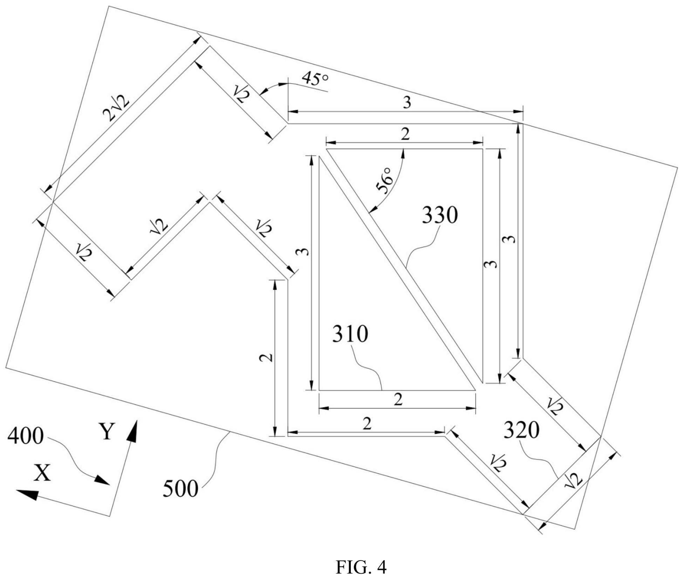

Taking the two types of maps shown in FIGS. 3 and 4 as examples, the process of the alignment operation is described:
In the map shown in FIG. 3 (with the length unit in meters, not shown in the figure), after all the boundary information is acquired and the boundary lines on the map are integrated, all the boundary lines are divided into two groups, namely, a first group with a first positioning line 110 as the positioning line and a second group with a second positioning line 120 as the positioning line. Specifically, the included angle between the first positioning line 110 and the second positioning line 120 is 45°.

According to the integration, the total boundary length is 32.728 m, the sum of the lengths of the positioning line and all the orthogonal lines in the first group is 20.000 m, and the sum of the lengths of the positioning line and all the orthogonal lines in the second group is 12.728 m.

In the embodiment, after comparison, it is known that the maximum boundary line length is 20.000 m. After calculation, it is known that the reference ratio is 61.110%, which exceeds the determination threshold of 60%.

In another embodiment, after calculation, it is known that the test ratio corresponding to the first positioning line 110 is 61.110%, and the test ratio corresponding to the second positioning line 120 is 38.890%. After comparison, it is known that the reference ratio is 61.110%, which exceeds the determination threshold of 60%.

Therefore, a reference plane Cartesian coordinate system 200 needs to be established. The X-axis of the reference plane Cartesian coordinate system 200 is parallel to the straight line where the first positioning line 110 is located, and the Y-axis of the reference plane Cartesian coordinate system 200 is perpendicular to the straight line where the first positioning line 110 is located. After the map is aligned according to the reference plane Cartesian coordinate system 200, the boundary information of the aligned map is outputted to the user terminal.

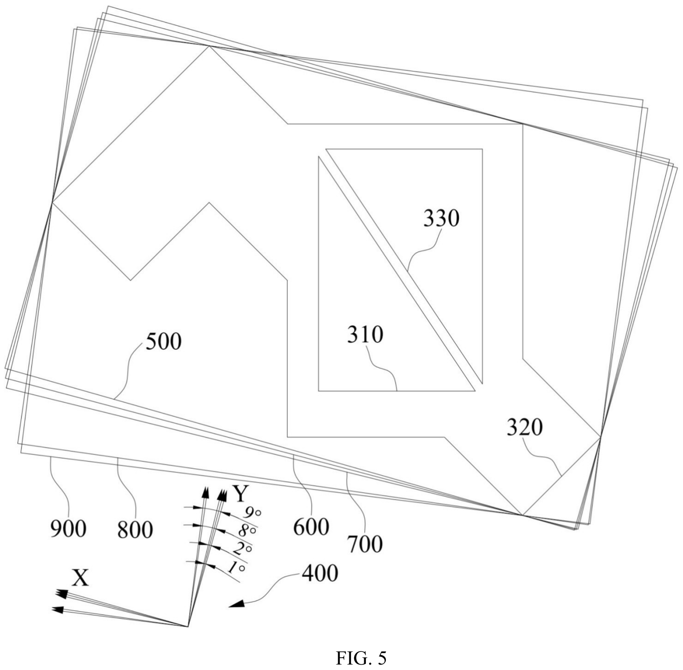

In the maps shown in FIGS. 4 and 5 (with the length unit in meters, not shown in the figures), after all the boundary information is acquired and the boundary lines on the map are integrated, all the boundary lines are divided into three groups, namely, a third group with a third positioning line 310 as the positioning line, a fourth group with a fourth positioning line 320 as the positioning line, and a fifth group with a fifth positioning line 330 as the positioning line. Specifically, the included angle between the third positioning line 310 and the fourth positioning line 320 is 45°, and the included angle between the third positioning line 310 and the fifth positioning line 330 is 65°.

According to the integration, the total boundary length is 39.939 m, the sum of the lengths of the positioning line and all the orthogonal lines in the third group is 20.000 m, the sum of the lengths of the positioning line and all the orthogonal lines in the fourth group is 12.728 m, and the sum of the lengths of the positioning line and all the orthogonal lines in the fifth group is 7.211 m.

In the embodiment, after comparison, it is known that the maximum boundary line length is 20.000 m. After calculation, it is known that the reference ratio is 50.076%, which does not exceed the determination threshold of 60%.

In another embodiment, after calculation, it is known that the test ratio corresponding to the third positioning line 310 is 50.076%, the test ratio corresponding to the fourth positioning line 320 is 31.869%, and the test ratio corresponding to the fifth positioning line 330 is 18.055%. After comparison, it is known that the reference ratio is 50.076%, which does not exceed the determination threshold of 60%.

The above result shows that the straight-line reference determination method is unsuitable for the map to determine the plane Cartesian coordinate system, so the rectangular reference determination method is used instead. The minimum circumscribed rectangle of the map is selected as the reference for alignment, and a reference circumscribed rectangle is acquired to determine the corresponding plane Cartesian coordinate system, thereby completing the alignment operation for the map.

To achieve the above technical effects, a circumscribed plane Cartesian coordinate system 400 needs to be established, and two longer sides parallel to the X-axis of the circumscribed plane Cartesian coordinate system 400 and two shorter sides parallel to the Y-axis of the circumscribed plane Cartesian coordinate system 400 are used to generate a circumscribed rectangle of the shape formed by the boundary lines. The circumscribed rectangle generated by a first circumscribed plane Cartesian coordinate system 400 is a first circumscribed rectangle 500, and the area of the first circumscribed rectangle 500 is used as the test area for calculation and recording. Then, the circumscribed plane Cartesian coordinate system 400 is rotated to acquire a new circumscribed rectangle, and the area of the newly generated circumscribed rectangle is calculated and recorded.

In the embodiment, there are a total of 90 circumscribed plane Cartesian coordinate systems 400, so there are also 90 test areas in total. The coordinate axis rotates by 1° each time. Each time the circumscribed plane Cartesian coordinate system 400 rotates, a new circumscribed rectangle is generated, and the area of the newly generated circumscribed rectangle is calculated and recorded. This process continues until the areas of all the circumscribed rectangles are calculated. Finally, a comparison is made to acquire the circumscribed rectangle with the smallest area, namely, the reference circumscribed rectangle.

FIG. 5 shows the position information of the second circumscribed rectangle 600, the third circumscribed rectangle 700, the fourth circumscribed rectangle 800, and the fifth circumscribed rectangle 900 corresponding to the first circumscribed plane Cartesian coordinate system 400 when it is rotated by 1°, 2°, 8°, and 9°.

By taking the circumscribed plane Cartesian coordinate system 400 corresponding to the reference circumscribed rectangle as the plane Cartesian coordinate system, the map is aligned through the plane Cartesian coordinate system. Then, the boundary information of the aligned map is outputted to the user terminal.

The above embodiment can be applied to the field of intelligent robots and is commonly used in various types of autonomous operation devices. An autonomous operation device is provided with a control module and an interaction module. The control module, by utilizing the above method, can achieve the map alignment operation with respect to the working area, and enable the aligned map to be visually presented on the interaction module.

In the embodiment, the autonomous operation device is, in particular, a robot that can autonomously move in a preset area and perform a specific operation, typically such as an intelligent sweeper/vacuum cleaner performing a cleaning operation, or an intelligent lawn mower performing a lawn mowing operation. The specific operation, in particular, refers to an operation that processes the work surface and changes the state of the work surface. The present disclosure is described in detail by taking an intelligent lawn mower as an example. The autonomous operation device can autonomously walk on the surface of a working area, and in particular, as an intelligent lawn mower, can autonomously perform a lawn mowing operation on the ground. In addition to the control module and the interaction module, the autonomous operation device further includes at least a main body mechanism, a moving mechanism, a working mechanism, an energy module, and a detection module.

The main body mechanism typically includes a chassis and an apparatus housing. The chassis is configured to install and accommodate at least one of the functional mechanisms and functional modules, such as the moving mechanism, the working mechanism, the energy module, the detection module, the interaction module, and the control module. The apparatus housing is typically configured to at least partially cover the chassis, primarily for enhancing the aesthetics and recognizability of the autonomous operation device. In some embodiments, at least one of the functional mechanisms and functional modules described above is installed on the apparatus housing. In some existing technologies, the apparatus housing is configured to be repositionable for translation and/or rotation relative to the chassis under an external force. Combined with a suitable detection module, exemplarily such as a Hall sensor, the apparatus housing can further serve to detect events like collisions and lifting.

The control module typically includes at least one processor and at least one non-volatile memory. The memory stores a pre-written computer program or an instruction set, and the processor, according to the computer program or the instruction set, controls the performance of movements, work, and the like of the autonomous operation device. Further, the control module can also control and adjust the corresponding actions of the autonomous operation device and modify parameters in the memory according to a signal of the detection module and/or a user control instruction.

The interaction module is configured at least to receive control instruction information inputted by a user, transmit information requiring user perception, and communicate with other systems or devices to transmit and receive information. In the embodiment, the interaction module includes an input apparatus arranged on the autonomous operation device for receiving control instruction information inputted by a user, typically such as a control panel and an emergency stop key. The interaction module further includes a display screen, an indicator light, and/or a buzzer arranged on the autonomous operation device, enabling a user to perceive information through light or sound. In other embodiments, the interaction module includes a communication module arranged on the autonomous operation device and a terminal device independent from the autonomous operation device, such as a mobile phone, a computer, and a network server. User control instruction information or other information may be inputted on the terminal device and reach the autonomous operation device via a wired or wireless communication module.

Apparently, the above-described embodiments of the present disclosure are merely examples for clearly illustrating the present disclosure and are not intended to limit the embodiments of the present disclosure. Various changes and modifications can be made by those of ordinary skills in the art on the basis of the above description. It is unnecessary and impossible to exhaustively list all the embodiments herein. Any modification, equivalent, improvement, and the like made within the spirit and principle of the present disclosure shall all fall within the protection scope of the present disclosure.

## Claims

1. A map alignment method, comprising the following steps:
S10: acquiring boundary information of a map, wherein the boundary information comprises state information of boundary lines and a total boundary length, and the total boundary length is configured as a sum of lengths of all the boundary lines;
S20: classifying all boundary lines that meet a preset condition into one orthogonal line group;
S30: determining a relationship between a reference ratio and a determination threshold, if a first relationship is met, proceeding to S40, and if a second relationship is met, proceeding to S50, wherein the reference ratio is a ratio of a maximum boundary line length to the total boundary length, with the boundary line length being defined as a sum of lengths of all boundary lines within one orthogonal line group;
S40: establishing a plane Cartesian coordinate system based on a first reference, then proceeding to S60;
S50: establishing a plane Cartesian coordinate system based on a second reference, then proceeding to S60; and
S60: aligning the map according to the plane Cartesian coordinate system, and outputting the boundary information of the aligned map to a user terminal.

2. The map alignment method according to claim 1, wherein the preset condition is that the boundary lines have a parallel, collinear, or perpendicular relationship with each other.

3. The map alignment method according to claim 2, wherein the first relationship is that the reference ratio is not less than the determination threshold, and the second relationship is that the reference ratio is less than the determination threshold; the first reference is a boundary line corresponding to the reference ratio, and the second reference is a reference circumscribed rectangle.

4. The map alignment method according to claim 3, wherein S20 comprises the following detailed steps:
S21: selecting any one of the boundary lines as a positioning line;
S22: taking all boundary lines that are parallel, collinear, or perpendicular to the positioning line as orthogonal lines, summing the positioning line and all the orthogonal lines to provide a boundary line length, and calculating and recording the boundary line length;
S23: repeating the selection of a positioning line and calculating a corresponding boundary line length until no further positioning lines can be selected, then calculating and recording all boundary line lengths; and
S24: comparing and selecting a maximum boundary line length from all the boundary line lengths, and calculating a ratio of the maximum boundary line length to the total boundary length as the reference ratio.

5. The map alignment method according to claim 4, wherein S23 comprises the following detailed steps:
S231: determining whether there exists any boundary line that has not yet been used as either the positioning line or the orthogonal line, if so, proceeding to S232, and if not, proceeding to S24; and
S232: selecting any boundary line that has not yet been used as either the positioning line or the orthogonal line, replacing the boundary line as the positioning line, then repeating S22.

6. The map alignment method according to claim 3, wherein S50 comprises the following detailed steps:
S51: establishing a circumscribed plane Cartesian coordinate system (400), using two longer sides parallel to an X-axis of the circumscribed plane Cartesian coordinate system (400) and two shorter sides parallel to a Y-axis of the circumscribed plane Cartesian coordinate system (400) to generate a circumscribed rectangle of a shape formed by the boundary lines, using an area of the circumscribed rectangle as a test area, and calculating and recording the test area;
S52: rotating the circumscribed plane Cartesian coordinate system (400) for a predetermined angle multiple times, selecting the circumscribed plane Cartesian coordinate system (400) in different angles and calculating a corresponding test area until the circumscribed plane Cartesian coordinate system (400) has been rotated by 90°, then calculating and recording all test areas; and
S53: comparing all the test areas, and using a circumscribed rectangle with a smallest test area among all the test areas as the reference circumscribed rectangle.

7. The map alignment method according to claim 1, further comprising the following steps after S10:
S11: searching for a specified reference; and
S12: determining whether there exists the specified reference, if so, aligning the map based on the specified reference and outputting the boundary information of the aligned map to the user terminal, and if not, proceeding to S20.

8. The map alignment method according to claim 1, further comprising the following steps before S20:
S18: determining whether a ratio of a length of a longest boundary line to the total boundary length is not less than the determination threshold, if so, proceeding to S19, and if not, proceeding to S20; and
S19: establishing a plane Cartesian coordinate system with the longest boundary line as a reference, then proceeding to S60.

9. The map alignment method according to claim 1, further comprising the following steps before S30:
S28: determining whether there exists an orthogonal line group with at least two boundary lines, if so, proceeding to S30, and if not, proceeding to S50.

10. The map alignment method according to any one of claims 1 to 9, further comprising the following steps before S30:
S29: determining whether there exist at least two maximum boundary line lengths, if so, proceeding to S50, and if not, proceeding to S30.
